# FASCICULE DE BREVET EUROPEEN

(11) **EP 1 872 530 B1**
(45) Date de publication et mention de la délivrance du brevet: **19.06.2013**
(21) Numéro de dépôt: 06726109.9
(22) Date de dépôt: 03.04.2006
(51) Int. Cl.: H04L 12/28

(54) **PROCEDE DE TRANSFERT D'UN CODE D'INFORMATION ENTRE DEUX DISPOSITIFS DE COMMUNICATION**
VERFAHREN ZUM SENDEN EINES INFORMATIONSCODES ZWISCHEN ZWEI KOMMUNIKATIONSEINRICHTUNGEN
METHOD FOR TRANSMITTING AN INFORMATION CODE BETWEEN TWO COMMUNICATIONS DEVICES

(30) Priorité: 04.04.2005 FR 0503327
(43) Date de publication de la demande: 02.01.2008
(73) Titulaire: FRANCE TELECOM, 75015 Paris (FR)
(72) Inventeur: CLOAREC, Jean-Yves, F-22300 Lannion (FR); CADIOU, Jean-François, F-22560 Trebeurden (FR); AMELINE, Christophe, F-22300 Lannion (FR)
(74) Mandataire: Bioret, Ludovic
(86) Numéro de dépôt international: PCT/FR2006/000610
(87) Numéro de publication internationale: WO 2006/106199

(56) Documents cités:
- US-A- 6 130 892
- US-A1- 2003 167 405
- US-A1- 2004 047 358

## Description

La présente invention concerne un procédé de transfert d'un code d'information, d'un premier dispositif de communication vers un second dispositif de communication, par l'intermédiaire d'un réseau de communication, le code d'information étant représentatif de l'apparition d'un évènement sur le premier dispositif de communication.

Le domaine d'application de la présente invention est celui des réseaux locaux domestiques dans lesquels une pluralité de dispositifs de communication peuvent accéder à des services fournis par des plateformes de services reliées à un réseau de communication comme par exemple un réseau basé sur le protocole IP (Internet Protocol) tel que le réseau Internet. Ces dispositifs de communication sont par exemple des ordinateurs qui accèdent au réseau de communication par l'intermédiaire de fournisseurs d'accès, des terminaux téléphoniques autorisant des communications téléphoniques via le réseau de communication, par exemple par une technique appelée voix sur IP ou des terminaux audiovisuels communément appelés Set Top Box (STB) permettant l'accès à des services de fourniture de programmes audiovisuels par l'intermédiaire du réseau de communication.

Ces dispositifs de communication peuvent accéder au réseau de communication par l'intermédiaire d'un dispositif de communication appelé classiquement pont qui permet de relier deux réseaux de communication tels qu'un réseau basé sur le protocole IP et un réseau local domestique. Classiquement, un pont fonctionne conformément à la couche liaison du modèle OSI, acronyme de Open System Interconnection défini par l'ISO, qui en prévoit sept respectivement appelées : la couche physique, la couche liaison, la couche réseau, la couche transport, la couche session, la couche présentation et la couche application. La couche physique s'occupe de la transmission des bits sur un canal de transmission. La couche liaison a pour fonction essentielle de délimiter dans les flux de bits de la couche physique des trames qui sont transmises aux équipements identifiés dans l'entête de ces trames. Les couches supérieures peuvent être la couche réseau IP, la couche transport TCP ou UDP et des couches d'application.

Mettant en oeuvre la couche liaison, un pont filtre les trames de données à partir des adresses MAC source et destination qu'elles comprennent dans leur entête. MAC est l'acronyme de Media Access Control. Une adresse MAC est une adresse affectée à chaque équipement de communication, plus précisément à la carte réseau de chaque équipement de communication, ce qui permet à cet équipement d'être identifié de façon unique. Un pont, après apprentissage, identifie les adresses MAC des différents équipements qui sont reliés aux deux réseaux de communication qu'il relie. Du fait qu'il ne met en oeuvre que la couche physique et la couche liaison, un pont est indépendant des protocoles utilisés par les couches supérieures à la couche liaison, notamment les couches réseau et transport. Un pont ne connaît donc pas les différentes adresses utilisées au niveau de la couche réseau, par exemple les adresses IP, pour identifier à ce niveau des équipements qui sont reliés aux deux réseaux de communication.

Chacun des dispositifs de communication du réseau local domestique se voit attribuer une adresse IP publique ou privée par la plateforme de service à laquelle il est abonné. Cette adresse IP est délivrée de manière temporaire ou durable.

Une adresse IP publique est une adresse IP unique parmi l'ensemble des adresses IP du réseau IP. Une adresse IP privée est, quant à elle, une adresse unique parmi l'ensemble des adresses IP du sous-réseau de la plateforme de service. L'ensemble des adresses IP du sous-réseau de la plateforme de service forme le plan d'adressage du sous-réseau de la plateforme de service.

Il est courant que ces plateformes de service soient différentes. Ainsi, une plateforme de service de vidéo à la demande attribue à une Set Top Box (STB) une adresse IP, une plateforme de téléphonie sur IP attribue une autre adresse IP à un téléphone, un fournisseur d'accès fournit encore une autre adresse IP à un ordinateur. Ces adresses IP permettent aux dispositifs de communication de communiquer avec leurs plateformes respectives. Lorsque ces adresses IP sont privées, ces adresses permettent aux dispositifs de communication de communiquer avec leurs plateformes respective via les sous-réseaux de ces plateformes auxquels ils sont connectés. Il est ainsi courant que les dispositifs de communication d'un même réseau local domestique ne puissent communiquer entre eux car ils ne connaissent pas l'adresse IP des autres dispositifs de communication du réseau local domestique.

Cette situation est problématique dans certains cas. Par exemple, lorsqu'un pont doit effectuer une mise à jour de son logiciel demandée par la plateforme de service à laquelle il est associé, le transit des données par l'intermédiaire du pont est interrompu et cela sans que les autres dispositifs de communication soient informés des raisons de l'interruption du transit des données.

En effet, le pont, ne connaissant pas l'adresse IP des différents dispositifs de communication du réseau local domestique, ne peut pas transférer des messages d'information de la mise à jour aux autres dispositifs de communication.

De plus, un pont ne dispose généralement pas d'une interface homme-machine permettant un dialogue avec les dispositifs de communication du réseau local domestique. Les utilisateurs des dispositifs de communication du réseau local domestique ne peuvent donc pas être prévenus de cette situation.

Le document CHEN - US 2004/0047358 décrit un Gateway domestique comportant un module pour des communications téléphoniques large bande, et une connexion vers l'Internet ou autres réseaux d'ordinateur. Le Gateway dispose de différents modules de communication et un écran utilisé pour afficher des données ou des messages Internet. Cet écran peut être amovible de façon à pouvoir se déplacer à proximité du Gateway.

Le but de la présente invention permet de résoudre les inconvénients de l'art antérieur et de proposer un procédé de transfert d'un code d'information, d'un premier dispositif de communication vers un second dispositif de communication, par l'intermédiaire d'un réseau de communication, le code d'information étant représentatif de l'apparition d'un évènement sur le premier dispositif de communication, les dispositifs de communication implémentant au moins une couche de liaison conforme au modèle OSI. Ce procédé comporte les étapes effectuées par le premier dispositif de communication de :
- détermination d'un code d'information, représentatif de l'apparition de l'évènement, parmi un ensemble prédéterminé de codes d'information,
- insertion du code d'information dans un champ apte à être traité par la couche de liaison d'une trame de données,
- transfert de la trame de données formée.

Corrélativement, la présente invention concerne un dispositif de communication apte à transférer un code d'information vers un autre dispositif de communication par l'intermédiaire d'un réseau de communication, le code d'information étant représentatif de l'apparition d'un évènement sur le dispositif de communication, les dispositifs de communication implémentant au moins une couche de liaison conforme au modèle OSI. Ce dispositif de communication comporte :
- des moyens de détermination d'un code d'information, représentatif de l'apparition de l'évènement, parmi un ensemble prédéterminé de codes d'information,
- des moyens d'insertion du code d'information dans un champ d'une trame de données, ledit champ étant apte à être traité par la couche de liaison,
- des moyens de transfert de la trame de données formée.

Ainsi, il est possible de notifier l'apparition d'un évènement à d'autres dispositifs de communication d'un réseau de communication tels que par exemple un réseau local domestique sans qu'il soit nécessaire de connaître les adresses IP des autres dispositifs de communication. La communication est limitée à un échange selon la couche de niveau deux dans le modèle OSI, c'est-à-dire la couche liaison.

En effet, en insérant un code d'information dans le champ apte à être traité par la couche liaison, tous les dispositifs de communication implémentant la couche physique et la couche liaison du modèle OSI sont aptes à traiter ce message. Il n'est plus nécessaire, pour pouvoir transmettre des informations, d'avoir des dispositifs de communication implémentant les couches supérieures du modèle OSI.

Selon un autre aspect de l'invention, le premier dispositif de communication est apte à transférer des trames de données entre un premier réseau de communication et un second réseau de communication, le second dispositif de communication est apte à accéder à des services fournis par le second réseau de communication pour un usager et dispose de moyens d'information de l'usager.

Ainsi, lorsqu'un évènement survient sur un dispositif de communication tel qu'un pont, les autres dispositifs de communication utilisant celui-ci pour accéder à un second réseau de communication tel qu'un réseau IP sont avertis de l'évènement. En effet, la plupart des ponts ne disposent pas d'une interface homme-machine permettant de communiquer des informations à un usager.

Selon un autre aspect de l'invention, le premier dispositif de communication reçoit, par l'intermédiaire du réseau de communication, au moins une trame de données dont le champ apte à être traité par la couche de liaison comprend une information représentative d'une réponse de l'usager, et traite l'évènement en fonction de l'information représentative de la réponse de l'usager.

Ainsi, le traitement de l'évènement n'est effectué que lorsque l'usager l'accepte, ce qui limite le désagrément causé par le traitement de l'évènement à l'usager.

Selon un autre aspect de l'invention, une pluralité de seconds dispositifs de communication sont connectés au réseau de communication et la trame de données est diffusée à l'ensemble des seconds dispositifs de communication.

Ainsi, il n'est pas nécessaire de connaître les adresses MAC des autres dispositifs de communication.

Selon un autre aspect de l'invention, l'évènement est une mise à jour logicielle du premier dispositif de communication.

Ainsi, l'usager est informé d'un éventuel arrêt des échanges de données entre les dispositifs de communication reliés au premier réseau et leurs fournisseurs de service respectifs.

L'invention concerne aussi un procédé de traitement d'une trame de données émise par un premier dispositif de communication sur un réseau de communication et reçue par un second dispositif de communication, les dispositifs de communication implémentant au moins une couche liaison conforme au modèle OSI. Ce procédé comporte les étapes effectuées par le second dispositif de communication de :
- réception de la trame de données,
- lecture d'un code d'information dans un champ de la trame de données, ledit champ étant apte à être traité par la couche liaison,
- détermination d'un message associé audit code d'information lu,
- transfert du message vers un moyen d'affichage.

Corrélativement, l'invention concerne un dispositif de communication apte à traiter une trame de données émise par un autre dispositif de communication sur un réseau de communication, les dispositifs de communication implémentant au moins une couche liaison du modèle OSI. Ce dispositif de communication comporte :
- des moyens de réception de la trame de données,
- des moyens de lecture d'un code d'information dans un champ de la trame de données, ledit champ étant apte à être traité par la couche liaison,
- des moyens de détermination d'un message associé audit code d'information lu,
- des moyens de transfert du message vers un moyen d'affichage.

Ainsi, il est possible de notifier l'apparition d'un évènement à un usager d'un réseau de communication tel que par exemple un réseau local domestique sans qu'il soit nécessaire, pour le dispositif sur lequel apparaît un évènement, de disposer d'une interface homme-machine ou de connaître les adresses IP des autres dispositifs de communication.

Selon un autre aspect de l'invention, le dispositif de communication reçoit une réponse de l'usager audit message,
- forme au moins une trame de données dont le champ apte à être traité par la couche liaison comprend une information représentative d'une réponse de l'usager,
- transfère sur le réseau de communication la trame de données formée.

Ainsi, l'usager peut autoriser ou non, voire retarder le traitement de l'évènement.

Les étapes du procédé de transfert précédemment décrit sont exécutées par un dispositif informatique, en l'espèce le premier ou le second dispositif de communication, sous la commande d'instructions logicielles. Par conséquent, l'invention concerne également un module logiciel destiné à être stocké ou transmis par un support de données comprenant des instructions logicielles pour faire exécuter le procédé de transfert par un dispositif informatique. Le support de données peut être un support matériel de stockage, par exemple un CD-ROM, une disquette magnétique ou un disque dur, ou bien un support transmissible tel qu'un signal électrique, optique ou radio.

Les étapes du procédé de traitement précédemment décrit sont exécutées par un dispositif informatique, en l'espèce le premier ou le second dispositif de communication, sous la commande d'instructions logicielles. Par conséquent, l'invention concerne également un module logiciel destiné à être stocké ou transmis par un support de données comprenant des instructions logicielles pour faire exécuter le procédé de traitement par un dispositif informatique. Le support de données peut être un support matériel de stockage, par exemple un CD-ROM, une disquette magnétique ou un disque dur, ou bien un support transmissible tel qu'un signal électrique, optique ou radio.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 représente un exemple de système de communication dans lequel la présente invention est implémentée ;
- la Fig. 2 représente la structure d'une trame Ethernet ;
- la Fig. 3 représente un schéma bloc d'un dispositif de communication d'un premier type selon la présente invention ;
- la Fig. 4 représente un schéma bloc d'un dispositif de communication d'un second type selon la présente invention ;
- la Fig. 5 représente l'algorithme de transfert de code d'information dans une trame de données selon la présente invention ;
- la Fig. 6 représente l'algorithme de traitement d'une trame de données selon la présente invention.

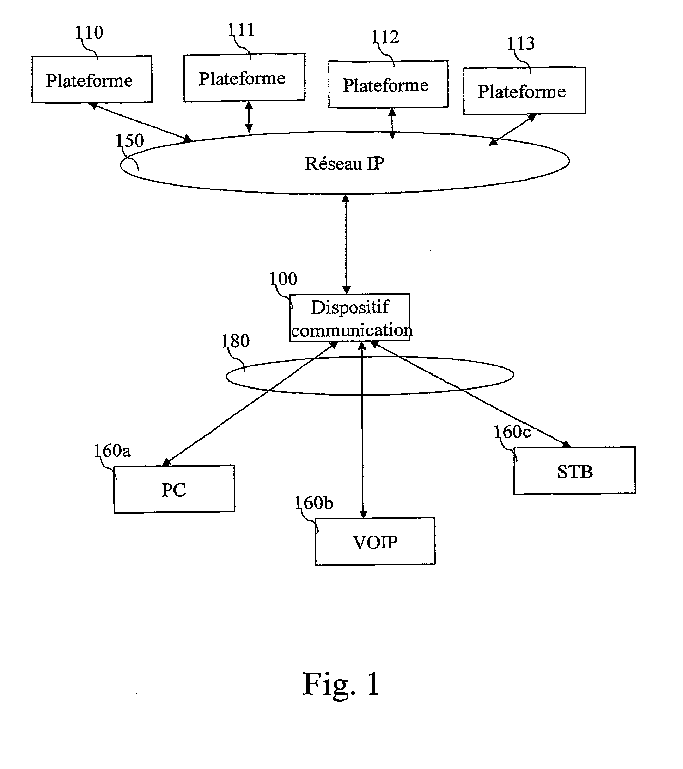

La Fig. 1 représente un exemple de système de communication dans lequel la présente invention est implémentée. Ce système de communication comprend un premier réseau de communication 180 et un second réseau de communication 150 reliés entre eux au moyen d'un dispositif de communication d'un premier type 100 tel qu'un pont.

Le premier réseau de communication 180 est, par exemple, un réseau local domestique auquel sont connectés des dispositifs de communication de premier type 100 et de second type 160. Ce réseau 180 est par exemple un réseau Ethernet conforme à la norme IEEE 802.3. Les dispositifs de communication de second type 160 sont par exemple et de manière non limitative un ordinateur 160a, un combiné téléphonique de voix sur IP 160b, un terminal audiovisuel du type Set Top Box (STB) 160c.

Le second réseau de communication 150 est, par exemple, le réseau Internet et plus généralement un réseau utilisant, dans sa couche réseau, le protocole Internet, dit ci-après réseau IP, auquel sont connectées des plateformes de service notées 110 à 113.

La plateforme de service 110 est, par exemple, un fournisseur d'accès Internet auquel l'ordinateur 160a est abonné. La plateforme de service 110 délivre une adresse IP temporaire ou durable à l'ordinateur 160a ainsi qu'à chaque dispositif de communication abonné à ses services. L'ensemble constitué de la plateforme 110 et des dispositifs de communication abonnés à son service constitue un premier sous-réseau.

La plateforme de service 111 est, par exemple, un fournisseur de service de téléphonie sur IP auquel le combiné téléphonique 160b est abonné. La plateforme de service 111 délivre une adresse IP au combiné téléphonique 160b ainsi qu'à chaque dispositif de communication abonné à ses services. L'ensemble constitué de la plateforme 111 et des combinés téléphoniques abonnés à son service constitue un second sous réseau.

La plateforme de service 112 est, par exemple, un fournisseur de service de mise à jour logicielle de ponts 100 de réseaux locaux domestiques 180.

La plateforme de service 113 est, par exemple, une plateforme de fourniture de programmes audiovisuels tels que des programmes de télévision sur Internet ou de vidéo à la demande auquel la STB 160c est abonnée. La plateforme de service 113 délivre une adresse IP à la STB 160c ainsi qu'à chaque STB abonnée à ses services. L'ensemble constitué de la plateforme 113 et des terminaux abonnés à son service constitue un troisième sous réseau.

Chaque sous-réseau peut être indépendant des autres sous-réseaux. Les dispositifs de communication 100, 160 ne peuvent classiquement pas communiquer l'un avec un autre au sein du réseau local domestique 180 car chacun d'eux ne connaît pas les adresses nécessaires pour le routage, dans ce réseau, des messages qu'il pourrait émettre.

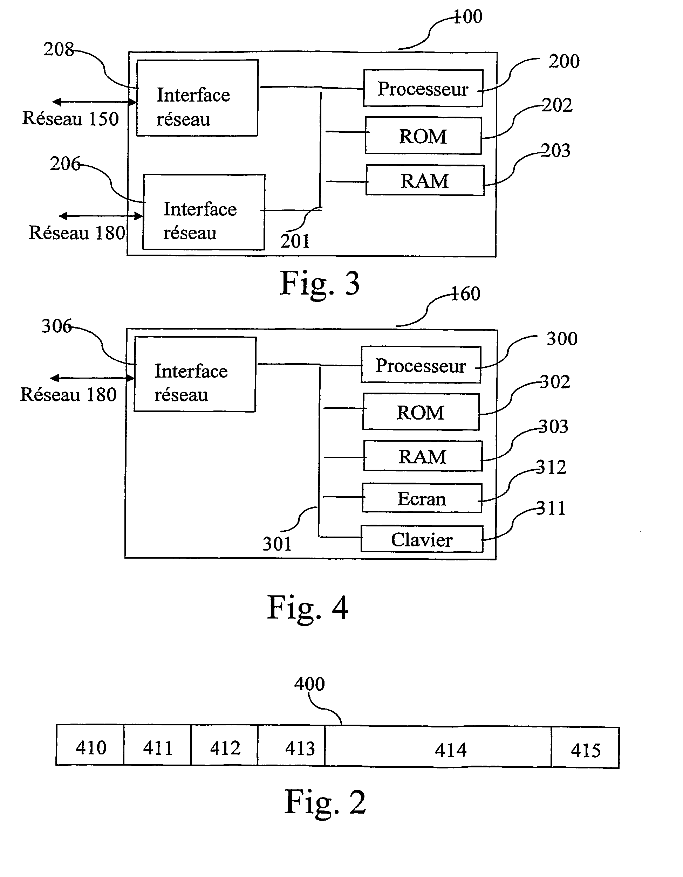

Selon l'invention, chaque dispositif de communication 100, 160 est apte à transférer un code d'information ou une information vers les autres dispositifs de communication connectés au même réseau local domestique 180. Ce code d'information ou cette information est représentatif de l'apparition d'un évènement qui a lieu sur le dispositif de communication qui émet ledit code. Pour ce faire, le code d'information ou l'information est inclus dans une trame de la couche liaison mise en oeuvre par le réseau 180. Par exemple, dans le cas où le réseau local 180 est un réseau Ethernet (conforme à la norme IEEE 802.3), ledit code d'information est inclus dans une trame Ethernet que l'on modifie, pour ce faire, conformément à la présente invention comme cela sera explicité en relation avec la Fig. 2.

Selon l'invention, chaque dispositif de communication 100, 160 est apte à recevoir une trame Ethernet modifiée selon la présente invention, à lire le code d'information qu'elle inclut et à le traiter, au niveau de la couche de liaison dudit réseau, afin de déterminer quelles données lui sont associées et à traiter celles-ci.

La Fig. 2 représente la structure d'une trame Ethernet telle qu'elle est modifiée conformément à la présente invention.

La trame Ethernet 400 est constituée de six champs notés 410 à 415. Le champ 410 est le préambule de la trame Ethernet et est constitué de huit octets.

Le champ 411 comprend l'adresse MAC du destinataire de la trame Ethernet sous la forme de six octets. Conformément à la norme IEEE 802.3, si ce champ 411 est à la valeur « FF » en hexadécimal, la trame Ethernet est une trame de diffusion, ce qui va permettre la diffusion de la trame à l'ensemble des dispositifs de communication du réseau 180 et, dans le cas d'invention, la diffusion du code d'information d'évènement. Si le bit de poids fort de ce champ est à 1, la trame n'est transmise qu'à un groupe de dispositifs de communication 160 dont l'adresse de groupe est définie par les autres bits du champ. Ceci permet une diffusion restreinte du code d'information d'évènement. Enfin, si le bit de poids fort est à 0, la trame n'est transmise qu'au seul dispositif de communication 160 dont l'adresse est donnée par les autres bits du champ.

Le champ 412 comprend l'adresse MAC de l'émetteur de la trame Ethernet exprimée en six octets, par exemple l'adresse MAC du pont 100.

Dans une trame Ethernet classique (non modifiée) conforme au standard Ethernet II, le champ 413 comprend une information représentative du type de protocole concerné par les données utiles qui sont incluses dans le champ de données 414 de la trame Ethernet. Ce champ peut aussi définir la longueur du champ des données utiles 414 conformément au standard IEEE 802.3. Dans une trame classique, le champ 414 inclut les paquets de la couche réseau, lesquels incluent les données utiles à transmettre. Sa longueur est au minimum de 46 octets et au maximum de 1500 octets.

Dans la mesure où, selon la présente invention, aucun paquet n'est à transmettre, le contenu du champ 414 est indifférent et l'information du protocole utilisé ou de sa longueur n'est plus pertinente.

Ainsi, dans un premier mode de réalisation de la présente invention, le champ 413 est utilisé par la présente invention pour inclure le code de l'information d'évènement à transmettre. On notera que le champ 414 est de taille fixe, par exemple minimale de 46 octets. Il comprend par exemple des données de bourrage.

Selon un second mode de réalisation de la présente invention, le champ 413 comprend un code d'information représentatif de l'apparition d'un évènement et d'invitation à lire le champ de données 414 de la trame Ethernet. Le champ 414 comprend alors les données décrivant l'évènement considéré. Il est aussi, dans ce mode de réalisation, de taille fixe, par exemple minimale de 46 octets. On notera que cette lecture peut être réalisée au niveau de la couche de liaison du réseau 180.

Le champ 415 est le champ qui permet de s'assurer que les données ont été correctement transmises et peuvent donc être délivrées au destinataire. Ce champ permet un contrôle de redondance cyclique ou en anglais «Cyclic Redundancy Check ».

La présente invention est ainsi particulièrement adaptée aux dispositifs de communication n'implémentant que la couche physique et la couche liaison telles que définies par l'ISO.

La Fig. 3 représente un schéma bloc d'un dispositif de communication d'un premier type selon la présente invention.

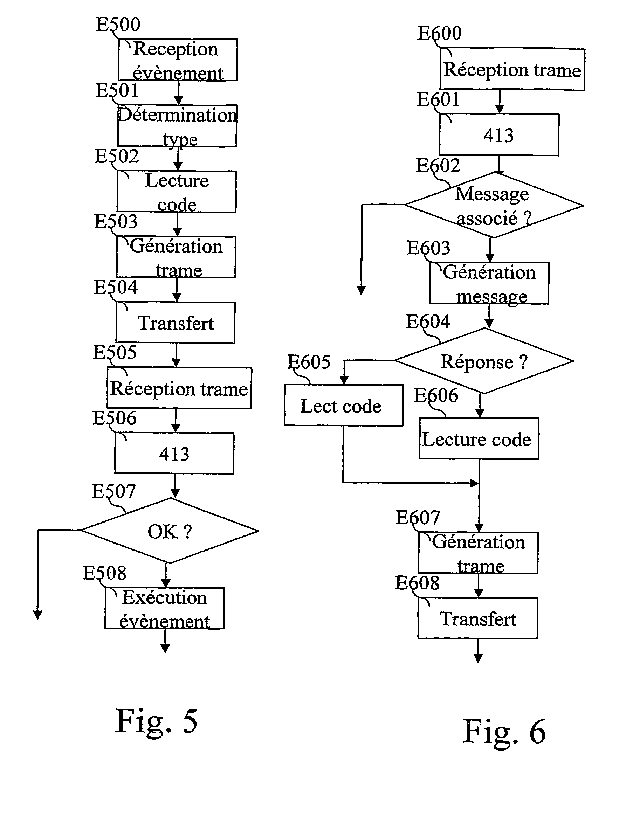

Le dispositif de communication d'un premier type est, par exemple, un pont 100 adapté à effectuer à partir d'un premier module logiciel les étapes des algorithmes tels que décrits en référence aux Fig. 5 et 6.

Le dispositif de communication d'un premier type 100 comporte un bus de communication 201 auquel sont reliés un processeur 200, une mémoire non volatile 202, une mémoire vive 203, une interface de communication 208 permettant l'échange de données avec le réseau IP 150, une interface de communication 206 permettant l'échange de données avec le réseau local domestique 180. La mémoire vive 203 mémorise les différentes adresses MAC des dispositifs de communication 160 et des plateformes 110 à 113 apprises par apprentissage.

Le dispositif de communication d'un premier type 100 implémente la couche physique et la couche liaison conforme au modèle OSI.

La mémoire non volatile 202 mémorise les programmes mettant en oeuvre l'invention, ainsi que les données permettant de mettre en oeuvre les algorithmes qui seront décrits par la suite en référence aux Figs. 5 et 6. La mémoire non volatile 202 mémorise les différents codes d'information représentatifs de l'apparition d'un évènement sur un dispositif de communication 100 ou 160. La mémoire non volatile 202 mémorise les différentes suites d'opérations correspondant à des codes d'informations reçus dans une trame de données conformément à la présente invention.

Ces codes d'informations sont représentatifs, par exemple et de manière non limitative, d'une mise à jour logicielle du dispositif de communication d'un premier type 100 ou d'un dispositif de communication d'un second type 160, d'une présentation d'un appel téléphonique, d'une annonce d'une fin de téléchargement d'une séquence audiovisuelle, d'une réception d'un courrier électronique, etc.

De manière plus générale, le premier module logiciel selon la présente invention est mémorisé dans un moyen de stockage. Ce moyen de stockage est lisible par le microprocesseur 200. Ce moyen de stockage est intégré ou non au dispositif de communication d'un premier type 100, et peut être amovible.

Lors de la mise sous tension du dispositif de communication d'un premier type 100, le premier module logiciel selon la présente invention est transféré dans la mémoire vive 203 qui contient alors le code exécutable de l'invention ainsi que les données nécessaires à la mise en oeuvre de l'invention.

Il est à remarquer qu'en variante, le dispositif de communication d'un premier type 100 dispose d'une interface homme-machine constituée d'au moins un écran et un clavier non représentés en Fig. 3.

Il est à remarquer aussi que le dispositif de communication d'un premier type tel que décrit précédemment est en variante compris dans un dispositif de communication comportant à la fois un module assurant la fonction de pont selon la présente invention pont et un module assurant la fonction de routeur, c'est-à-dire un module apte à effectuer un routage des paquets à partir d'adresses IP.

La Fig. 4 représente un schéma bloc d'un dispositif de communication d'un second type selon la présente invention.

Le dispositif de communication d'un second type 160 est adapté à effectuer à partir d'un deuxième module logiciel, les étapes des algorithmes tels que décrits en référence aux Fig. 5 et 6.

Le dispositif de communication d'un second type 160 implémente au moins la couche physique et la couche liaison conforme au modèle OSI.

Le dispositif de communication d'un second type 160 est de manière non limitative un dispositif de communication tel qu'un ordinateur 160a, un combiné de téléphonie sur IP 160b ou une STB 160c. Le dispositif de communication d'un second type 160 comporte un bus de communication 301 auquel sont reliés un processeur 300, une mémoire non volatile 302, une mémoire vive 303, une interface homme-machine constituée d'un écran 312 et d'un clavier 311, une interface de communication 306 permettant l'échange de données avec le réseau local domestique 180.

La mémoire non volatile 302 mémorise le deuxième module logiciel mettant en oeuvre l'invention, ainsi que les données permettant de mettre en oeuvre les algorithmes qui seront décrits par la suite en référence aux Figs. 5 et 6. La mémoire non volatile 302 mémorise les différents codes d'information représentatifs de l'apparition d'un évènement sur un dispositif de communication 100 ou 160. La mémoire non volatile 202 mémorise les différentes suites d'opérations correspondant à des codes d'informations reçus dans une trame de données conformément à la présente invention. Ces opérations sont par exemple l'affichage d'un message prédéterminé sur l'écran 312 du dispositif de communication d'un second type 160 ou sur l'écran d'un dispositif associé au dispositif de communication d'un second type 160.

De manière plus générale, les programmes selon la présente invention sont mémorisés dans un moyen de stockage. Ce moyen de stockage est lisible par le microprocesseur 300. Ce moyen de stockage est intégré ou non au dispositif, et peut être amovible.

Lors de la mise sous tension du dispositif de communication d'un second type 160, le deuxième module logiciel selon la présente invention est transféré dans la mémoire vive 303 qui contient alors le code exécutable de l'invention ainsi que les données nécessaires à la mise en oeuvre de l'invention.

La Fig. 5 représente l'algorithme de transfert de code d'information dans une trame de données selon la présente invention.

Cet algorithme est exécuté lorsqu'un évènement apparaît dans un dispositif de communication. Cet évènement est, par exemple et de manière non limitative, la réception par le pont 100 d'une mise à jour logicielle à effectuer, la réception par l'ordinateur 160a d'un courrier électronique ou la fin de la réception d'une vidéo à la demande par la STB 160c.

Nous allons maintenant décrire la Fig. 5 lorsqu'une mise à jour logicielle est à effectuer par le pont 100. Bien entendu, le présent algorithme est aussi exécuté par chaque dispositif de communication 160.

A l'étape E500, le processeur 200 du pont 100 détecte l'apparition d'un évènement.

A l'étape suivante E501, le processeur 200 détermine le type d'évènement. L'évènement est par exemple la réception d'un message de la plateforme de service 112. Ce message est représentatif d'un avis de mise à jour logicielle du pont 100. Il est à remarquer ici que lorsqu'un pont 100 doit effectuer une mise à jour de son logiciel, le transit des données par l'intermédiaire du pont 100 est interrompu et cela sans que les utilisateurs du réseau local domestique 180 soient prévenus de cette situation. En effet, un pont 100 ne dispose pas nécessairement d'une interface homme-machine permettant un dialogue avec les usagers du réseau local domestique. Le pont 100, ne connaissant pas l'adresse IP des différents dispositifs de communication 160 du réseau local domestique 180, ne peut pas transférer des messages d'information classiques aux dispositifs de communication 160 de manière à informer ceux-ci de l'évènement, ou informer les usagers du réseau local domestique 180 de la mise à jour lorsque ceux-ci disposent d'une l'interface homme-machine.

Selon l'invention, en utilisant un champ prédéterminé d'une trame de données apte à être traitée par les dispositifs de communication implémentant la couche physique et la couche liaison de l'OSI, il n'est pas nécessaire de connaître l'adresse IP des autres dispositifs de communication pour les informer de la mise à jour.

A l'étape suivante E502, le processeur 200 lit dans la mémoire non volatile 202 le code associé à l'évènement parmi un ensemble prédéterminé de code d'information. Selon l'invention, à chaque évènement correspond un code prédéterminé codé préférentiellement sur deux octets.

A l'étape suivante E503, le processeur 200 génère une trame de données. Cette trame de données est une trame Ethernet modifiée conformément à la présente invention..

En variante, le processeur 200 insère dans le champ 412, l'adresse d'un dispositif de communication 160. Le processeur 200 peut aussi générer au moins deux trames de données destinées respectivement à au moins deux dispositifs de communication 160.

A l'étape E504, la trame de données ainsi générée est transférée sur le réseau local domestique 180.

A l'étape E505, le processeur 200 détecte la réception d'une trame de données par l'intermédiaire de l'interface réseau 206.

A l'étape suivante E506, le processeur 200 lit le champ 413 de la trame de données reçue et détermine si celui-ci comprend un code prédéterminé selon la présente invention en vérifiant si celui-ci correspond à un code prédéterminé parmi l'ensemble des codes prédéterminés mémorisés dans la mémoire non volatile 202 du pont 100.

Selon le second mode de réalisation de la présente invention, le processeur 200 lit les champs 413 et 414 de la trame Ethernet.

Le processeur 200 passe ensuite à l'étape E507 qui consiste à vérifier si le code prédéterminé correspond à une acceptation générée par un dispositif de communication 160 en réponse à la trame d'information transférée à l'étape E504.

Si le code prédéterminé ne correspond pas à une acceptation, le processeur 200 n'effectue pas la mise à jour logicielle proposée par la plateforme 112.

Si le code prédéterminé correspond à une acceptation, le processeur 200 effectue à l'étape E508 la mise à jour logicielle proposée par la plateforme 112.

Il est à remarquer ici qu'en variante, les étapes E505 à E507 ne sont pas exécutées. Le processeur 200 procède à la mise à jour logicielle dès que la trame de données est transférée à l'étape E504.

La Fig. 6 représente l'algorithme de traitement d'une trame de données selon la présente invention.

Cet algorithme est exécuté à chaque réception d'une trame de données du réseau local domestique 180, générée par un dispositif de communication 100 ou 160. Par exemple, la trame de données est reçue à l'étape E600 par un dispositif de communication de second type 160 et correspond à la trame de données transférée à l'étape E504 de l'algorithme de la Fig. 5. Bien entendu, d'autres évènements peuvent être à l'origine de cette trame de données. Par exemple la réception par l'ordinateur 160a d'un courrier électronique ou la fin de la réception d'une vidéo à la demande par la STB 160c.

L'algorithme de la Fig. 6 est décrit lorsque celui-ci est exécuté par un dispositif de traitement 160.

A l'étape E601, le processeur 300 du dispositif de traitement 160 lit, selon le mode préféré de réalisation, le champ 413 de la trame de données reçue et détermine si celui-ci comprend un code prédéterminé selon la présente invention en vérifiant si celui-ci correspond à un code prédéterminé parmi l'ensemble des codes prédéterminés mémorisés dans la mémoire non volatile 302 du dispositif de traitement 160.

Selon le second mode de réalisation de la présente invention, le processeur 200 lit les champs 413 et 414 de la trame Ethernet.

A l'étape E602, le processeur 300 vérifie si un message est associé au code prédéterminé compris dans le champ 413.

Dans la négative, le processeur 300 arrête le présent algorithme. Dans l'affirmative, le processeur 300 passe à l'étape E603.

A l'étape E603, le processeur 300 forme le message associé au code prédéterminé compris dans le champ 413, voire le champ 414. Ce message est transféré à l'écran 312 du dispositif de traitement si celui-ci est un ordinateur 160 ou un combiné téléphonique de voix sur IP 160b. Lorsque le dispositif de traitement est une STB 160c, le message est transféré au téléviseur associé à la STB 160c. Ce message est, par exemple, un message du type « connexion Internet rompue, mise à jour logicielle du pont ». Ce message peut aussi être un message d'interrogation du type « mise à jour logicielle du pont proposée, accepter ? OUI/NON ».

Les étapes suivantes E604 à E605 sont exécutées seulement lorsque le message associé est un message d'interrogation.

A l'étape E604, le processeur 300 vérifie si l'usager du réseau local domestique 180 a répondu au message transféré à l'étape E603 en appuyant sur au moins une touche du clavier 311 du dispositif de traitement 160. Si la réponse est affirmative, le processeur 300 passe à l'étape E605 et lit, dans une table comprenant l'ensemble des codes prédéterminés mémorisée dans la mémoire non volatile 302, le code associé à la réponse affirmative. Cette opération effectuée, le processeur 300 passe à l'étape suivante E607. Si la réponse est négative, le processeur 300 passe à l'étape E606 et lit, dans une table comprenant l'ensemble des codes prédéterminés mémorisée dans la mémoire non volatile 302, le code associé à la réponse négative. Cette opération effectuée, le processeur 300 passe à l'étape suivante E607.

A l'étape E607, le processeur 300 génère une trame de données. Cette trame de données est une trame Ethernet modifiée conformément à la présente invention. Selon le mode préféré de réalisation de la présente invention, le champ 413 de la trame 400 comprend le code prédéterminé représentatif de la réponse de l'usager. Le champ 412 comprend six octets à la valeur FF en hexadécimal, le champ 411 comprend l'adresse MAC du pont 100 et le champ 414 comprend 46 octets de bourrage. Le champ 414, contrairement à une trame Ethernet classique, ne comprend pas de données informant les dispositifs de communication de la réponse de l'usager.

Selon le second mode de réalisation de la présente invention, les champs 413 et 414 de la trame 400 comprennent le code prédéterminé représentatif de la réponse de l'usager.

A l'étape E608, la trame de données ainsi générée est transférée sur le réseau local domestique 180.

Il est à remarquer ici que l'algorithme tel que décrit lorsqu'il est exécuté par un dispositif de communication d'un second type 160 est aussi exécuté, à la réception d'une trame transmise par un dispositif de communication d'un second type 160 à l'étape E504 de la Fig. 5, par un dispositif de communication d'un premier type 100 lorsque celui-ci dispose d'une interface homme-machine.

Bien entendu, la présente invention n'est nullement limitée aux modes de réalisation décrits ici, mais englobe, bien au contraire, toute variante à la portée de l'homme du métier.

## Revendications

1. Procédé de transfert d'un code d'information, d'un premier dispositif (100, 160) de communication vers un second dispositif (160, 100) de communication, par l'intermédiaire d'un réseau de communication (180), le code d'information étant représentatif de l'apparition d'un événement sur le premier dispositif (100, 160) de communication, les dispositifs de communication implémentant au moins une couche de liaison conforme au modèle OSI, **caractérisé en ce que** le procédé comporte les étapes effectuées par le premier dispositif de communication de :
- détermination (E501) d'un code d'information, représentatif de l'apparition de l'événement, parmi un ensemble prédéterminé de codes d'information,
- insertion (E503) du code d'information dans un champ (413) d'une trame de données (400), ledit champ (413) étant apte à être traité par la couche de liaison, ledit code d'information correspondant à un message à afficher au niveau du second dispositif,
- transfert (E504) de la trame de données formée.

2. Procédé selon la revendication 1, **caractérisé en ce que** le procédé comporte en outre les étapes de :
- réception (E505) par l'intermédiaire du réseau de communication d'au moins une trame de données, dont le champ (413) apte à être traité par la couche de liaison comprend une information représentative d'une réponse de l'usager,
- traitement (E507-E508) de l'événement en fonction de l'information représentative de la réponse de l'usager.

3. Procédé selon l'une quelconque des revendications précédentes, **caractérisé en ce qu'**une pluralité de second dispositifs (160, 100) de communication est connectée au réseau de communication (180) et **en ce que** la trame de données (400) est diffusée à l'ensemble des seconds dispositifs (160, 100) de communication.

4. Procédé selon l'une quelconque des revendications précédentes, **caractérisé en ce que** l'événement est une mise à jour logicielle du premier dispositif de communication (100, 160).

5. Procédé de traitement d'une trame de données (400) émise par un premier dispositif de communication (160, 100) sur un réseau de communication (180) et reçue par un second dispositif de communication, les dispositifs de communication (100, 160) implémentant au moins une couche liaison conforme au modèle OSI, **caractérisé en ce que** le procédé comporte les étapes effectuées par le second dispositif de communication de :
- réception (E600) de la trame de données,
- lecture (E601) d'un code d'information dans un champ (413) de la trame de données, ledit champ étant apte à être traité par la couche liaison,
- détermination (E602) d'un message associé audit code d'information lu, ledit code d'information correspondant à un message à afficher au niveau du second dispositif,
- transfert (E603) du message vers un moyen d'affichage.

6. Procédé selon la revendication 5, **caractérisé en ce que** le procédé comporte en outre les étapes de :
- réception (E604) d'une réponse de l'usager audit message,
- formation (E607) d'au moins une trame de données, dont le champ (413) apte à être traité par la couche liaison comprend une information représentative d'une réponse de l'usager,
- transfert (E608) sur le réseau de communication (180) de la trame de données (400) formée.

7. Dispositif de communication (100, 160) apte à transférer un code d'information vers un autre dispositif (160, 100) de communication par l'intermédiaire d'un réseau de communication (180), le code d'information étant représentatif de l'apparition d'un événement sur le dispositif de communication, les dispositifs de communication implémentant au moins une couche de liaison conforme au modèle OSI, **caractérisé en ce que** le dispositif de communication comporte :
- des moyens (200, 300) de détermination d'un code d'information, représentatif de l'apparition de l'événement, parmi un ensemble prédéterminé de codes d'information,
- des moyens (200, 300) d'insertion du code d'information dans un champ (413) d'une trame de données (400), ledit champ (413) étant apte à être traité par la couche de liaison, ledit code d'information correspondant à un message à afficher au niveau de l'autre dispositif,
- des moyens (200, 300) de transfert de la trame de données formée.

8. Dispositif de communication (100, 160) apte à traiter une trame de données (400) émise par un autre dispositif de communication (160, 100) sur un réseau de communication (180), les dispositifs de communication implémentant au moins une couche liaison du modèle OSI, **caractérisé en ce que** le dispositif de communication comporte :
- des moyens (200, 300) de réception de la trame de données,
- des moyens de lecture d'un code d'information dans un champ (413) de la trame de données, ledit champ étant apte à être traité par la couche liaison,
- des moyens (200, 300) de détermination d'un message associé audit code d'information lu, ledit code d'information correspondant à un message à afficher au niveau de l'autre dispositif,
- des moyens (200, 300) de transfert du message vers un moyen d'affichage.

9. Module logiciel stocké sur un support de données comportant des instructions logicielles pour faire exécuter le procédé de transfert selon l'une quelconque des revendications 1 à 4.

10. Module logiciel stocké sur un support de données comportant des instructions logicielles pour faire exécuter le procédé de traitement selon l'une quelconque des revendications 5 à 6.

11. Signal destiné à être transmis entre un premier dispositif (100, 160) de communication et un second dispositif (160, 100) de communication, par l'intermédiaire d'un réseau de communication (180), les dispositifs de communication implémentant au moins une couche de liaison conforme au modèle OSI,
**caractérisé en ce que** ledit signal est porteur d'un message d'information comprenant un champ (413) contenant un code d'information représentatif de l'apparition d'un événement sur le premier dispositif (100, 160) de communication, ledit code d'information correspondant à un message à afficher au niveau du second dispositif, ledit champ (413) étant apte à être traité par la couche de liaison.

## Patentansprüche

1. Verfahren zur Übertragung eines Informationscodes von einer ersten Kommunikationsvorrichtung (100, 160) zu einer zweiten Kommunikationsvorrichtung (160, 100) mittels eines Kommunikationsnetzes (180), wobei der Informationscode für das Auftreten eines Ereignisses in der ersten Kommunikationsvorrichtung (100, 160) repräsentativ ist, wobei die Kommunikationsvorrichtungen mindestens eine Verbindungsschicht gemäß dem OSI-Modell implementieren, **dadurch gekennzeichnet, dass** das Verfahren die folgenden von der ersten Kommunikationsvorrichtung ausgeführten Schritte aufweist:
- Ermittlung (E501) eines für das Auftreten des Ereignisses repräsentativen Informationscodes unter einer vorbestimmten Einheit von Informationscodes,
- Einfügung (E503) des Informationscodes in ein Feld (413) eines Datenrahmens (400), wobei das Feld (413) von der Verbindungsschicht verarbeitet werden kann, wobei der Informationscode einer auf der Ebene der zweiten Vorrichtung anzuzeigenden Mitteilung entspricht,
- Übertragung (E504) des geformten Datenrahmens.

2. Verfahren nach Anspruch 1, **dadurch gekennzeichnet, dass** das Verfahren außerdem die folgenden Schritte aufweist:
- Empfang (E505), mittels des Kommunikationsnetzes, mindestens eines Datenrahmens, dessen Feld (413), das von der Verbindungsschicht verarbeitet werden kann, eine für eine Antwort des Benutzers repräsentative Information enthält,
- Verarbeitung (E507-E508) des Ereignisses abhängig von der für die Antwort des Benutzers repräsentativen Information.

3. Verfahren nach einem der vorhergehenden Ansprüche, **dadurch gekennzeichnet, dass** eine Vielzahl von zweiten Kommunikationsvorrichtungen (160, 100) mit dem Kommunikationsnetz (180) verbunden ist, und dass der Datenrahmen (400) an die Gesamtheit der zweiten Kommunikationsvorrichtungen (160, 100) verbreitet wird.

4. Verfahren nach einem der vorhergehenden Ansprüche, **dadurch gekennzeichnet, dass** das Ereignis eine Softwareaktualisierung der ersten Kommunikationsvorrichtung (100, 160) ist.

5. Verfahren zur Verarbeitung eines von einer ersten Kommunikationsvorrichtung (160, 100) in einem Kommunikationsnetz (180) gesendeten und von einer zweiten Kommunikationsvorrichtung empfangenen Datenrahmens (400), wobei die Kommunikationsvorrichtungen (100, 160) mindestens eine Verbindungsschicht gemäß dem OSI-Modell implementieren, **dadurch gekennzeichnet, dass** das Verfahren die folgenden von der zweiten Kommunikationsvorrichtung ausgeführten Schritte aufweist:
- Empfang (E600) des Datenrahmens,
- Lesen (E601) eines Informationscodes in einem Feld (413) des Datenrahmens, wobei das Feld von der Verbindungsschicht verarbeitet werden kann,
- Ermittlung (E602) einer dem gelesenen Informationscode zugeordneten Mitteilung, wobei der Informationscode einer auf der Ebene der zweiten Vorrichtung anzuzeigenden Mitteilung entspricht,
- Übertragung (E603) der Mitteilung zu einer Anzeigeeinrichtung.

6. Verfahren nach Anspruch 5, **dadurch gekennzeichnet, dass** das Verfahren außerdem die folgenden Schritte aufweist:
- Empfang (E604) einer Antwort des Benutzers auf die Mitteilung,
- Formen (E607) mindestens eines Datenrahmens, dessen Feld (413), das von der Verbindungsschicht verarbeitet werden kann, eine für eine Antwort des Benutzers repräsentative Information enthält,
- Übertragung (E608) im Kommunikationsnetz (180) des geformten Datenrahmens (400).

7. Kommunikationsvorrichtung (100, 160), die einen Informationscode an eine andere Kommunikationsvorrichtung (160, 100) mittels eines Kommunikationsnetzes (180) übertragen kann, wobei der Informationscode für das Auftreten eines Ereignisses in der Kommunikationsvorrichtung repräsentativ ist, wobei die Kommunikationsvorrichtungen mindestens eine Verbindungsschicht gemäß dem OSI-Modell implementieren, **dadurch gekennzeichnet, dass** die Kommunikationsvorrichtung aufweist:
- Einrichtungen (200, 300) zur Ermittlung eines für das Auftreten des Ereignisses repräsentativen Informationscodes unter einer vorbestimmten Einheit von Informationscodes,
- Einrichtungen (200, 300) zum Einfügen des Informationscodes in ein Feld (413) eines Datenrahmens (400), wobei das Feld (413) von der Verbindungsschicht verarbeitet werden kann, wobei der Informationscode einer auf der Ebene der anderen Vorrichtung anzuzeigenden Mitteilung entspricht,
- Einrichtungen (200, 300) zur Übertragung des geformten Datenrahmens.

8. Kommunikationsvorrichtung (100, 160), die einen von einer anderen Kommunikationsvorrichtung (160, 100) in einem Kommunikationsnetz (180) gesendeten Datenrahmen (400) verarbeiten kann, wobei die Kommunikationsvorrichtungen mindestens eine Verbindungsschicht des Modells OSI implementieren, **dadurch gekennzeichnet, dass** die Kommunikationsvorrichtung aufweist:
- Einrichtungen (200, 300) zum Empfang des Datenrahmens,
- Einrichtungen zum Lesen eines Informationscodes in einem Feld (413) des Datenrahmens, wobei das Feld von der Verbindungsschicht verarbeitet werden kann,
- Einrichtungen (200, 300) zur Ermittlung einer dem gelesenen Informationscode zugeordneten Mitteilung, wobei der Informationscode einer auf der Ebene der anderen Vorrichtung anzuzeigenden Mitteilung entspricht,
- Einrichtungen (200, 300) zur Übertragung der Mitteilung zu einer Anzeigeeinrichtung.

9. Auf einem Datenträger gespeichertes Softwaremodul, das Softwareanweisungen aufweist, um das Übertragungsverfahren nach einem der Ansprüche 1 bis 4 ausführen zu lassen.

10. Auf einem Datenträger gespeichertes Softwaremodul, das Softwareanweisungen aufweist, um das Verarbeitungsverfahren nach einem der Ansprüche 5 bis 6 ausführen zu lassen.

11. Signal, das dazu bestimmt ist, zwischen einer ersten Kommunikationsvorrichtung (100, 160) und einer zweiten Kommunikationsvorrichtung (160, 100) mittels eines Kommunikationsnetzes (180) übertragen zu werden, wobei die Kommunikationsvorrichtungen mindestens eine Verbindungsschicht gemäß dem OSI-Modell implementieren,
**dadurch gekennzeichnet, dass** das Signal eine Informationsmitteilung trägt, die ein Feld (413) enthält, das einen für das Auftreten eines Ereignisses in der ersten Kommunikationsvorrichtung (100, 160) repräsentativen Informationscode umfasst, wobei der Informationscode einer auf der Ebene der zweiten Vorrichtung anzuzeigenden Mitteilung entspricht, wobei das Feld (413) von der Verbindungsschicht verarbeitet werden kann.

## Claims

1. Method for transferring an information code, from a first communication device (100, 160) to a second communication device (160, 100), by way of a communication network (180), the information code being representative of the occurrence of an event on the first communication device (100, 160), the communication devices implementing at least one link layer in accordance with the OSI model, **characterized in that** the method comprises the steps performed by the first communication device of:
- determination (E501) of an information code, representative of the occurrence of the event, from among a predetermined set of information codes,
- insertion (E503) of the information code into a field (413) of a data frame (400), said field (413) being able to be processed by the link layer, said information code corresponding to a message to be displayed at the second device,
- transfer (E504) of the data frame formed.

2. Method according to Claim 1, **characterized in that** the method furthermore comprises the steps of:
- reception (E505) by way of the communication network of at least one data frame, whose field (413) able to be processed by the link layer comprises an item of information representative of a response of the user,
- processing (E507-E508) of the event as a function of the item of information representative of the response of the user.

3. Method according to any one of the preceding claims, **characterized in that** a plurality of second communication devices (160, 100) is connected to the communication network (180) and **in that** the data frame (400) is broadcast to the set of second communication devices (160, 100).

4. Method according to any one of the preceding claims, **characterized in that** the event is a software update of the first communication device (100, 160).

5. Method for processing a data frame (400) sent by a first communication device (160, 100) on a communication network (180) and received by a second communication device, the communication devices (100, 160) implementing at least one link layer in accordance with the OSI model, **characterized in that** the method comprises the steps performed by the second communication device of:
- reception (E600) of the data frame,
- reading (E601) of an information code in a field (413) of the data frame, said field being able to be processed by the link layer,
- determination (E602) of a message associated with said information code read, said information code corresponding to a message to be displayed at the second device,
- transfer (E603) of the message to a display means.

6. Method according to Claim 5, **characterized in that** the method furthermore comprises the steps of:
- reception (E604) of a response of the user to said message,
- formation (E607) of at least one data frame, whose field (413) able to be processed by the link layer comprises an item of information representative of a response of the user,
- transfer (E608) on the communication network (180) of the data frame (400) formed.

7. Communication device (100, 160) able to transfer an information code to another communication device (160, 100) by way of a communication network (180), the information code being representative of the occurrence of an event on the communication device, the communication devices implementing at least one link layer in accordance with the OSI model, **characterized in that** the communication device comprises:
- means (200, 300) for determining an information code, representative of the occurrence of the event, from among a predetermined set of information codes,
- means (200, 300) for inserting the information code into a field (413) of a data frame (400), said field (413) being able to be processed by the link layer, said information code corresponding to a message to be displayed at the other device,
- means (200, 300) for transferring the data frame formed.

8. Communication device (100, 160) able to process a data frame (400) sent by another communication device (160, 100) on a communication network (180), the communication devices implementing at least one link layer of the OSI model, **characterized in that** the communication device comprises:
- means (200, 300) for receiving the data frame,
- means for reading an information code in a field (413) of the data frame, said field being able to be processed by the link layer,
- means (200, 300) for determining a message associated with said information code read, said information code corresponding to a message to be displayed at the other device,
- means (200, 300) for transferring the message to a display means.

9. Software module stored on a data medium comprising software instructions for executing the transfer method according to any one of Claims 1 to 4.

10. Software module stored on a data medium comprising software instructions for executing the processing method according to any one of Claims 5 to 6.

11. Signal intended to be transmitted between a first communication device (100, 160) and a second communication device (160, 100) by way of a communication network (180), the communication devices implementing at least one link layer in accordance with the OSI model,
**characterized in that** said signal carries an information message comprising a field (413) containing an information code representative of the occurrence of an event on the first communication device (100, 160), said information code corresponding to a message to be displayed at the second device, said field (413) being able to be processed by the link layer.
